Europäisches Patentamt

European Patent Office

Office européen des brevets

(19)

(11) Publication number: **0 065 017**
**B1**

(12) **EUROPEAN PATENT SPECIFICATION**

(45) Date of publication of patent specification: **18.06.86**

(51) Int. Cl.⁴: **C 08 J 9/14** // C08L25/08

(21) Application number: **81103700.1**

(22) Date of filing: **14.05.81**

(54) Styrene-acrylic acid copolymer foam.

(43) Date of publication of application:
**24.11.82 Bulletin 82/47**

(45) Publication of the grant of the patent:
**18.06.86 Bulletin 86/25**

(84) Designated Contracting States:
**BE CH DE FR GB IT LI NL SE**

(56) References cited:
US-A-2 911 382
US-A-3 547 838
US-A-3 673 126

RESEARCH DISCLOSURE, vol. 178, February
1979, Industrial Opportunities Ltd.
HOMEWELL, HAVANT, HAMPSHIRE (GB) page
56, number 17818, paragraph "Laminate"

T.H. FERRIGNO: "Rigid Plastics Foams",
Reinhold Publishing Corp., LONDON (GB), pp.
245-246 "Polystyrene foams, cutting and
forming"

The file contains technical information
submitted after the application was filed and
not included in this specification

(73) Proprietor: **THE DOW CHEMICAL COMPANY**
**2030 Dow Center Abbott Road P.O. Box 1967**
**Midland, MI 48640 (US)**

(72) Inventor: **Suh, Kyung Won**
**1533 Welsh Hills Road**
**Granville Licking Ohio (US)**
Inventor: **Jones, Jonathan Richard**
**687 Noank Road**
**Mystic New London Connecticut (US)**

(74) Representative: **Hann, Michael, Dr. et al**
**Patentanwälte Dr. Michael Hann Dr. H.-G.**
**Sternagel Marburger Strasse 38**
**D-6300 Giessen (DE)**

Courier Press, Leamington Spa, England.

# 0 065 017

## Description

Extruded polystyrene foams are well known items of commerce and are employed primarily as thermal insulation. However, other extruded polystyrene foams are employed for a variety of other end use applications. By the term "extruded foam" is meant a body of generally uniform cellular construction which does not exhibit sharp discontinuities in cell size across a section taken therefrom which is in sharp contrast to the so-called bead foams prepared by molding a plurality of expandable or partially expanded cellular styrene polymer particles. Extruded polystyrene foam has considerable application in the decorative area wherein sometimes it is cut to a desired shape and the shape employed as a decoration or part of a decorative display. Sometimes a foam is sculptured to various configurations which may then be painted or otherwise coated to form a decorative article. Cutting and shaping of such extruded foam is accomplished in a number of ways. One convenient means for cutting shapes from a plank or rectangular foam body is using a hot wire cutter. A wire having a substantial electrical resistance when hot, such as Nichrome wire, is heated by means of appropriate electrical current and is employed to melt its way through a foam body very much in the manner that one might employ a jig or saber saw.

Saws, knives, routers and abrasives also may be used to shape extruded foam. Desirably, in the fabrication of shaped articles from extruded foam, cutting or shaping operations should be accomplished as quickly as possible. As polystyrene is a thermoplastic, some care must be taken in the selection of the cutting tools and in the variety of foam employed. There has been developed a machinability test for the evaluation of the machinability of plastic foams, and more particularly of extruded polystyrene foam. In such testing a router bit is employed; the bit has a blade of flat steel measuring (2 inches by 3-3/32 inches) 5.1 cm×7.86 cm. On the center of one of the longer edges is affixed a cylindrical shank having its axis in the plane of the blade. The opposite edge has a (1-1/2 inch) 3.8 cm radius semi-circle cut therefrom which results in a tool which when rotated by means of the shank and forced into a piece of foam will leave a (3-inch) 7.6 cm diameter hemisphere projecting therefrom. The router bit is rotated at 4,250 revolutions per minute and the desired cut is made with a single smooth stroke beneficially employing a drill press. The time required to make a cut having a smooth surface, that is, without blemishes or tearing of the foam is noted. The more desirable foams permit making a smooth surfaced cut in about one second, whereas the less desirable foams require longer periods of time to accomplish the cut. For polystyrene foams having good machinability in the density range of (2 pounds per cubic foot) 32.0 g/l, most have a cell size in the range of from 1.4 to 5 millimeters. Oftentimes although they may be machined rapidly, the size of the cells results in an undesirably rough exterior and in some cases, an appearance which is not aesthetically appealing. Such foamed articles oftentimes are employed for floral arrangements wherein a significant portion of their desirability is the ease with which a plant stem may be manually inserted into a block of foam without prior preparation. Such ease of plant stem insertion generally corresponds to the machinability of the foam. The easier the foam is to machine, the easier it is to push the end of a flower stem therein and the plant be supported in a desired position by the foam. In the cutting of polystyrene foam with hot wire technique, oftentimes an undesirable or distorted configuration occurs where the operator pauses and changes the direction of the cut. If the wire is operating at a commercially desirable temperature, that is a temperature at which cuts can be quickly and easily made, the phenomenon of "melt back" is observed. As the wire is passed through the foam at a normal or relatively high cutting speed, the kerf is about the width of the wire. However, if the operator pauses or substantially slows the cutting speed, the radiant heat from the wire can be sufficient to melt the foam or at least cause the foam to collapse and provide a kerf which is substantially wider than the wire. A convenient form for the handling of extruded foam is often in the form of boards which are prepared from large extruded foam bodies by conventional woodworking techniques, that is sawing and planing. Therefore, machinability for certain applications is a highly desired characteristic.

It would be desirable if there were available an improved synthetic resinous thermoplastic extruded foam which exhibited a high degree of machinability.

It would also be desirable if there were available a synthetic resinous thermoplastic extruded foam which exhibited a reduced tendency to melt back when cut with a hot wire.

It would also be desirable if there were available an improved synthetic resinous thermoplastic extruded foam which could be prepared using a volatile fluid foaming agent of minimal toxicity and environmental impact.

It would also be desirable if there were available an improved synthetic resinous thermoplastic extruded foam having good machinability and increased resistance to solvents.

These benefits and other advantages are achieved in a synthetic resinous thermoplastic extruded foam having a direction of extrusion and an axis of extrusion, the foam having a plurality of generally closed cells containing gas, the foam having a cross sectional configuration taken in a plane normal to the axis of extrusion of at least (8 square inches) 51.6 cm² and a minimum dimension of (0.7 inch) 1.78 cm, the foam comprising a copolymer of from 99.5 parts by weight of styrene to 70 parts by weight styrene copolymerized therein from 0.5 to 30 parts by weight of acrylic acid and having a molecular weight of 100,000 to 350,000 and having an average cell size within the range of 0.5 to 3 millimeters.

The preparation of styrene and acrylic acid copolymer is well known and is disclosed in U.S. Letters Patent 3,035,033. Foams in accordance with the present invention can be readily prepared employing

# 0 065 017

styrene-acrylic acid copolymer having a molecular weight as determined by gel permeation chromatography of from 100,000 to 350,000. However, it is preferred to employ such copolymers having weight average molecular weight of from 150,000 to 300,000. The amount of acrylic acid utilized may be from 0.5 to 30 parts by weight with 99.5 to 70 parts by weight of styrene. A particularly desirable range is from 1 to 20 parts by weight acrylic acid and from 99 to 80 parts by weight styrene. A preferred range is from 5 to 20 parts by weight of acrylic acid and from 95 to 80 parts by weight of styrene. Extruded foams in accordance with the present invention have a density of from (1.2 to 5 pounds per cubic foot) 19.2 to 80.0 g/l. The cell size of the foam in accordance with the present invention is from 0.5 to 3 millimeters and advantageously from 0.6 to 2 millimeters as determined in accordance with the American Society for Testing Materials standard D 3576. Foam in accordance with the present invention is advantageously prepared by providing heat plastified resin as hereinbefore described, admixing the heat plastified resin with a suitable volatile fluid foaming agent, for example ethyl chloride, the heat plastified resin-fluid foaming agent mixture being maintained under a pressure sufficient to prevent foaming thereof and subsequently discharging a foamable gel of the heat plastified resin and foaming agent into a region of lower pressure, such as atmospheric pressure to cause the gel to foam and cool in a self-supporting condition. Generally the volatile fluid foaming agent is employed in quantity of foam 1.2 to 2.3 moles per kilogram of resin. Generally the gel and blowing agent are admixed mechanically at a temperature of from 180°C to 220°C, the temperature of the gel on extrusion is usually from 122°C to 148°C. Advantageously in such mixing, the fluid foaming agent is injected into the barrel and the extruder by means of a metering pump to provide the desired mixture of resinous component and foaming agent. Extrusion of plastic foams is well known and is set forth in the following U.S. Patents: 2,669,751; 2,740,157; 2,838,801; 3,751,377; 3,817,669; 3,954,929; 3,897,528; 3,914,085.

A plurality of foams were prepared employing a copolymer of 92 parts by weight of styrene and 8 parts by weight of acrylic acid having a weight average molecular weight of 196,000 as determined by gel permeation chromatography. The polymer was in the form of pellets or granules. The polymer was extruded using a (2 1/2-inch) 6.35 cm extruder wherein 12 parts by weight of ethyl chloride was added per 100 parts by weight of the copolymer. The extruder barrel temperature was 217°C; the temperature of the resultant extruded gel was 109—125°C to prepare foams of varying cell size and density. In each case a generally uniform foam was obtained which on expansion had a cross section dimension of about (2 inches by 8 inches) 5.1 cm×20.3 cm. On cooling to room temperature, the foam was sectioned and the cell size in vertical direction determined, the vertical direction being the thickness of the extruded foam plank. Samples were aged for various periods of time and the machinability tested in the hereinbefore described manner. For purposes of comparison, a plurality of polystyrene foam samples of varying density and cell size were evaluated for machinability in the hereinbefore described manner. Both styrene acrylic acid foams and polystyrene foams were aged for a sufficient length of time but most of the blowing agent employed for the manufacture of the foams had been replaced by air. The results are set forth in Table I wherein the abbreviation SAA indicates styrene acrylic acid; the abbreviation PS indicates polystyrene; PCF indicates pounds per cubic foot; (s) indicates seconds; and (mm) indicates millimeters.

TABLE I
SAA Machinability vs. PS

| PS | | | SAA | |
| --- | --- | --- | --- | --- |
| Density (PCF) g/l | Machining time s | Size mm | Machining time s | Density (PCF) g/l |
| (1.73) 27.7 | 2 | 1.9 | 1—2 | (1.97) 31.5 |
| (1.59) 25.4 | 2 | 1.4 | 1 | (1.74) 27.8 |
| (1.71) 27.4 | 3 | 1.2 | 1 | (1.79) 28.6 |
| | | 0.9 | 2 | (2.00) 32.0 |
| (1.68) 26.9 | 3 | 0.8 | 3 | (1.95) 31.2 |
| (1.68) 26.9 | 4 | 0.75 | 3—4 | (1.92) 30.7 |
| | 4 | 0.6 | 4 | (1.87) 29.9 |
| | | 0.5 | 3—4 | (2.08) 33.3 |
| (2.18) 34.9 | 4 | 0.4 | | |

From Table I, can readily be seen that samples employing styrene-acrylic acid copolymer have substantially improved machinability over the samples utilizing polystyrene. It was observed that each of the polystyrene samples exhibited some tearing and rough surface, whereas the samples employing styrene-acrylic acid copolymer showed no tearing. Foams of samples were evaluated for solvent

3

resistance. Samples of styrene-acrylic acid foam showed no effect from normal pentane, normal heptane, cyclohexane, normal pentanol or normal butanol. Polystyrene foam was severely attacked by both normal pentane and normal heptane, and dissolved in cyclohexane.

Styrene acrylic acid foam and polystyrene foam were evaluated for hot wire cutting by three different tests. In the first test a nichrome wire 0.020 inches in diameter is connected to an electrical power source and heated to obtain a bright red glow. Samples were manually pushed against the wire and a vertical cut of about (1 inch) 2.54 cm made in the sample. The sample remained at rest for a period of time set forth in Table II as "Time at Rest", moved about (1 inch) 2.54 cm further, stopped again for a period of time. When the foam sample stopped relative to the wire, some melt back of the foam occurred and an enlarged hole in the foam obtained. The diameter of the hole is reported in Table II as "Hole Diameter for Measured Time at Rest".

A second test with the same wire was employed wherein a rectangular piece was cut from one edge of the foam sample. The cutting was accomplished at the rate of (1 inch) 2.54 cm per second. When the cutting was completed, the piece was then placed back in the sample and the total gap measured, divided by 2 and is reported as gap width at (1 inch) 2.54 cm per second cutting rate.

A third test was performed by providing an inclined plane having a nichrome wire horizontally disposed and generally parallel to the surface. A (4 inch by 4 inch) 10.1 cm by 10.1 cm foam sample was placed on the inclined plane above and resting on the nichrome wire, a weight placed on the foam sample, electrical power was applied to the nichrome wire and the time required to cut through the (4 inch by 4 inch) 10.1 cm by 10.1 cm sample recorded and is reported in Table II as "Cutting Time" for the (4 inch by 4 inch) 10.1 cm by 10.1 cm cross section.

In addition, styrene acrylic acid polymer foams are more resistant to solvents than are foams of polystyrene.

TABLE II

Cutting SAA by hot wire vs. PS

| Sample | Density | Hole diameter for measured "Time at Rest" | | | | Gap width (at 1"/s cutting rate)[a] | Cutting time (4"×4" cross-section)[b] |
|---|---|---|---|---|---|---|---|
| | | 2 s | 3 s | 4 s | 5 s | | |
| | g/l (PCF) | | | | | | |
| SAA | 35.6 (2.22) | 2.0 mm | 2.5 mm | 3.5 mm | 5.0 mm | 0.6 mm | 13 s |
| PS | 36.2 (2.26) | 2.5 mm | 3.0 mm | 5.0 mm | 5.5 mm | 1.0 mm | 13 s |

[a] (1 inch/s) 2.54 cm/s cutting rate.
[b] (4 inch×4 inch) 10.1 cm×10.1 cm cross-section.
PCF indicates pounds per cubic foot.

It was observed that each of the polystyrene samples exhibited some tearing and rough surface, whereas the samples employing styrene-acrylic acid copolymer showed no tearing.

In a manner similar to the foregoing illustrations, other styrene-acrylic acid copolymers which are readily machined are prepared. Among the many usable blowing agents for the preparation of styrene-acrylic acid copolymer are ethyl chloride, methyl chloride, mixtures of dichlorofluoromethane, dichlorodifluoromethane, normal pentane with dichlorodifluoromethane, ethyl chloride with dichlorodifluoromethane, methyl chloride with dichlorodifluoromethane, methylchloride with 1 - chloro - 1,1-difluoroethane, ethylchloride with 1 - chloro - 1,1 - difluoroethane, carbon dioxide and dichlorodifluoromethane, carbon dioxide and 1 - chloro - 1,1 - difluoroethane, carbon dioxide and trichlorofluoromethane, carbon dioxide and methyl chloride. Carbon dioxide and ethyl chloride are exemplary of mixed blowing agents suitable for the preparation of foams in accordance with the present invention. Generally such mixtures contain 30—70 parts by weight of the first component and 70—30 parts by weight of the second component, such as trichlorofluoromethane and dichlorofluoromethane; normal pentane and dichlorodifluoromethane; ethyl chloride and dichlorodifluoromethane; methyl chloride and difluoromethane; methyl chloride and 1 - chloro - 1,1 - difluoroethane; ethyl chloride and 1 - chloro - 1,1 - difluoroethane; carbon dioxide and dichlorodifluoromethane; carbon dioxide and 1 - chloro - 1,1 - difluoroethane; carbon dioxide and trichlorofluoromethane; carbon dioxide and methyl chloride; carbon dioxide and ethyl chloride.

As is apparent from the foregoing specification, the present invention is susceptible of being embodied with various alterations and modifications which may differ particularly from those that have been described in the preceding specification and description. For this reason, it is to be fully understood that all of the foregoing is intended to be merely illustrative and is not to be construed or interpreted as being

# 0 065 017

restrictive or otherwise limiting of the present invention, excepting as it is set forth and defined in the hereto-appended claims.

## Claims

1. A synthetic resinous thermoplastic extruded foam having a direction of extrusion and an axis of extrusion, a plurality of generally closed cells containing gas, a cross sectional configuration taken in a plane normal to the axis of extrusion of at least 51.6 cm$^2$ (8 square inches) and a minimum dimension of 1.78 cm (0.7 inch), and characterized by comprising a copolymer of from 70 to 99.5 parts by weight of styrene copolymerized with 0.5 to 30 parts by weight of acrylic acid and having a molecular weight of 100,000 to 350,000 and having an average cell size within the range of 0.5 to 3 millimeters.

2. The foam of Claim 1 wherein the copolymer contains from 1 to 20 parts by weight acrylic acid and from 99 to 80 parts by weight styrene.

3. The foam of Claim 2 wherein the copolymer contains from 5 to 20 parts by weight acrylic acid and from 95 to 80 parts by weight of styrene.

4. The foam of Claim 1 having a density of 19.2 to 80.0 g/l (1.2 to 5 pounds per cubic foot).

5. The foam of Claim 1 having an average cell size within the range of 0.6 to 2 millimeters.

## Patentansprüche

1. Synthetischer, harzhaltiger, thermoplastischer extrudierter Schaum mit einer Extrusionsrichtung und einer Extrusionsachse, einer Vielzahl von Gas enthaltenden, im allgemeinen geschlossenen Zellen, einem Querschnitt von mindestens 51 cm$^2$ (8 square inches) in einer Ebene senkrecht zur Extrusionsachse und einer Mindestgröße von 1,78 cm (0,7 inch), dadurch gekennzeichnet, daß er ein Copolymer aus von 70 bis 99,5 Gew.-Teilen Styrol, copolymerisiert mit 0,5 bis 30 Gew.-Teilen Acrylsäure enthält, und ein Molekulargewicht von 100.000 bis 350.000 und eine mittlere Zellgröße im Bereich von 0,5 bis 3 mm aufweist.

2. Schaum nach Anspruch 1, dadurch gekennzeichnet, daß das Copolymer von 1 bis 20 Gew.-Teilen Acrylsäure und von 99 bis 80 Gew.-Teilen Styrol enthält.

3. Schaum nach Anspruch 1, dadurch gekennzeichnet, daß das Copolymer von 5 bis 20 Gew.-Teilen Acrylsäure und von 95 bis 80 Gew.-Teilen Styrol enthält.

4. Schaum nach Anspruch 1, dadurch gekennzeichnet, daß er eine Dichte von 19,2 bis 80,0 g/l (1,2 bis 5 pounds/cubic foot) aufweist.

5. Schaum nach Anspruch 1, dadurch gekennzeichnet, daß die mittlere Zellgröße im Bereich von 0,6 bis 2 mm liegt.

## Revendications

1. Mousse thermoplastique de résine, synthétique, extrudée possédant une direction d'extrusion et un axe d'extrusion, plusieurs alvéoles généralement fermés contenant du gaz, une configuration de la coupe transversale prise dans un plan normal à l'axe d'extrusion d'au moins 51,6 cm$^2$ (8 pouces carrés) et une dimension minimale de 1,78 cm (0,7 pouce), caractérisée en ce qu'elle comprend un copolymère constitué de 70 à 99,5 parties en poids de styrène copolymérisées avec 0,5 à 30 parties en poids d'acide acrylique, possédant une masse moléculaire de 100 000 à 350 000 et ayant une dimension moyenne d'alvéole comprise dans un intervalle allant de 0,5 à 3 millimètres.

2. Mousse selon la revendication 1, dans laquelle le copolymère contient de 1 à 20 parties en poids d'acide acrylique et de 99 à 80 parties en poids de styrène.

3. Mousse selon la revendication 2, dans laquelle le copolymère contient de 5 à 20 parties en poids d'acide acrylique et de 95 à 80 parties en poids de styrène.

4. Mousse selon la revendication 1, qui possède une masse volumique de 19,2 à 80,0 g/l (1,2 à 5 livres par pied cubique).

5. Mousse selon la revendication 1, qui possède une dimension moyenne d'alvéole comprise dans un intervalle allant de 0,6 à 2 millimètres.

5